# EUROPÄISCHE PATENTSCHRIFT

(11) **EP 2 789 394 B1**
(45) Veröffentlichungstag und Bekanntmachung des Hinweises auf die Patenterteilung: **15.08.2018**
(21) Anmeldenummer: 14001234.5
(22) Anmeldetag: 03.04.2014
(51) Int. Cl.: B02C 23/04, F16M 1/00, B07B 11/00, B08B 17/00

(54) **Verfahrenstechnische Maschine zur Installation in eine Wand**
Processing machine for installation in a wall
Machine technologique à installer dans une paroi

(30) Priorität: 13.04.2013 DE 102013006411
(43) Veröffentlichungstag der Anmeldung: 15.10.2014
(73) Patentinhaber: HOSOKAWA ALPINE Aktiengesellschaft, 86199 Augsburg (DE)
(72) Erfinder: Born, Olaf, 86486 Bonstetten (DE); Stahl, Jürgen, 86738 Deiningen (DE); Wagner, Anton, 86157 Augsburg (DE)

(56) Entgegenhaltungen:
- EP-A1- 1 300 195
- EP-A2- 1 118 381
- DE-A1- 10 311 997
- US-A- 4 997 417

## Beschreibung

Die Erfindung richtet sich auf eine Vorrichtung zum Einbauen einer oder mehrerer verfahrenstechnischer Maschinen in eine Öffnung einer Wand eines Raums mit einer Halteplatte die die Maschinen aufnimmt.

Verfahrenstechnische Maschinen und Apparate wie Mühlen kommen unter anderem in der pharmazeutischen Industrie zum Einsatz. Mit diesen Maschinen werden hoch wirksame und / oder toxische Wirkstoffe verarbeitet. Dazu werden die Maschinen in Isolatoren eingebaut, damit das Bedienpersonal und die Umwelt nicht mit den genannten Stoffen in Kontakt kommen. In diesen Isolatoren ist der Reinraum in dem das Produkt verarbeitet wird vom Technikbereich getrennt, sodass kein Wirkstoff und keine Luft aus dem Produktbereich in den Technikbereich übertreten und keine Verunreinigungen und Stoffe aus dem Technikbereich in den Produktbereich übergehen. Beide Bereiche sind Bestandteil des Isolators. Im Reinraum sind Dosiergeräte, Mühlen und andere produktberührte Komponenten der Maschinen bzw. Anlage angeordnet. Im Technikbereich befinden sich die Antriebe der Maschinen, die Steuerungen und die Verkabelungen, oder die Antriebs- und Steuerungsbereiche befinden sich außerhalb des Isolators wie in der EP 1 300 195 A1 offenbart. Überschreiten die Maschinen, die in der Produktion zum Einsatz kommen, eine bestimmte Größe wird es sehr aufwendig und kostenintensiv diese in einen Isolator einzubauen. Diese Maschinen werden als Ganzes, d.h. Produktbereich und Technikbereich in einem Reinraum aufgestellt und betrieben. Dies bedeutet für den Betreiber die komplette Maschine an die Reinraumbedingungen anzupassen, nämlich steril zu halten und zu reinigen. Aufgrund von konstruktiven Gegebenheiten ist eine akkurate GMP-gerechte Reinigung, speziell des Technikbereichs, nicht immer zu garantieren bzw. nur mit sehr großem Aufwand möglich. Auch die Kontrolle der GMP-gerechten Reinigung ist nicht möglich. Bei der Reinigung dieser Maschinen werden die technischen Grenzen erreicht.

Üblicherweise wird die Luftführung im Reinraum, soweit technisch möglich kontrolliert und definiert ausgeführt. Beispielsweise führt das Lüfterrad eines Motors zur Störung der Luftströmung und erzeugt ungewollte, kritische und turbulente Bereiche im Reinraum, wodurch es zu ungewollten Aufwirbelungen aber auch Ablagerungen von Produkt und Verunreinigungen kommt.
Alternativ werden Einhausungen um die kritischen Bereiche wie Motore und Steuerungen gebaut, welche aber das benötigte Raumvolumen für diese Komponenten erhöhen. Des Weiteren ist es im Reinraum dann nur sehr erschwert möglich die Antriebseinheit zu warten oder im Falle einer Störung wieder in Gang zu setzen. Es besteht immer die Gefahr einer Kontamination des Reinraums. Beheben von Störungen und Wartungsarbeiten sind nur dann möglich und zulässig, wenn der Reinraum freigegeben ist und die Produktion somit unterbrochen ist.
Alternativ werden Maschinen auch stationär über zwei getrennte Räume aufgebaut. Die DE 103 11 997 A1 beschreibt eine Stülpfilterzentrifuge, die in einem Reinraum und einem Maschinenraum aufgebaut ist. Das Maschinengestell ist stationär auf einem Stützgestell befestigt und über dieses im Boden des Maschinenraums verankert. Am Maschinengestell ist der Verfahrensraum angeschlossen der durch eine Gebäudetrennwand in den Reinraum hineinragt. Ein flexibles gasdichtes Verbindungelement zwischen Gebäudetrennwand und Zentrifuge trennt den Reinraum vom Maschinenraum.
Die US 4 997 417 A zeigt ebenfalls eine Zentrifuge die über Dichtungselemente in eine Öffnung einer Wand eingebaut ist und so Maschinenseite von Reinraumseite abgrenzt. Auch diese Zentrifuge ist stationär aufgestellt.
Die EP 1 118 381 A2 offenbart einen Behälter mit Rührwerk, der aus zwei Halbschalen aufgebaut ist und in die Decke eines Raumes eingebaut ist, um den Produktionsbereich (Reinraum) von dem Maschinenbereich zu trennen. Auch diese Vorrichtung ist stationär, da sie fest in die Decke des einen Raumes eingebaut ist.
Der Erfindung liegt daher die Aufgabe zugrunde, eine Lösung zu schaffen, die einen einfachen und schnellen Ein- und Ausbau von Vorrichtungen ermöglichen, bei denen eine konstruktive Trennung der produktberührten und zu reinigenden Komponenten der Maschine von den zum Betrieb der Maschine benötigten Antriebs-/ und Steuerungskomponenten vorzusehen ist.

Bei einer verfahrentechnischen Maschine der eingangs beschriebenen Art wird die Aufgabe erfindungsgemäß durch das Kennzeichen das Anspruches 1 gelöst.
Die verfahrenstechnischen Maschinen wie beispielsweise Mühlen und Zellenradschleusen sind konstruktiv so auf eine Vorrichtung mit Halteplatte gebaut, dass alle zum Antreiben und Steuern der Maschinen erforderlichen Komponenten durch eine oder mehrere Halteplatten von den produktberührten Komponenten der Maschinen getrennt sind. Die Vorrichtung mit Halteplatte ist in eine Ausnehmung einer Wand eines Raums so einbaubar, dass die produktberührten Komponenten in einem Raum angeordnet sind und die Antriebs- und Steuerungskomponenten der Maschinen in einem zweiten Raum, z.B. dem Technikbereich, angeordnet sind.
Bei dem Raum für die produktberührten Komponenten handelt es sich um einen Reinraum. Die Öffnung in der Wand kann eine Tür sein, aber auch ein Fenster.

Durch diese konstruktive Gestaltung wird eine Reduktion der zu reinigenden Teile im Reinraum erreicht. Schlecht zu reinigende Bereiche speziell der Antriebstechnik müssen nicht mehr aufwendig gekapselt oder gereinigt werden. Die Antrieb- und Steuereinheit ist jederzeit zugänglich. Die Produktion muss für Reparatur- oder Instandsetzungsarbeiten nicht zwangsweise unterbrochen werden. Der Reinraum braucht für Arbeiten an den Antrieben und der Steuerung nicht freigegeben zu werden.
Die Maschinen selbst sind auf bestmögliche Reinigung hinsichtlich Spaltfreiheit, Entleerbarkeit und vieles mehr optimiert. Sie sind GMP-konform ausgeführt.
Der Technikbereich kann durch eine senkrechte Halteplatte vom Reinraum getrennt sein, er kann aber auch unterhalb des Reinraumes angeordnet sein und so durch eine waagerechte Halteplatte vom Reinraum getrennt sein.
Die Halteplatte der Vorrichtung weist eine an ihrem Umfang umlaufende Dichtung auf, die die Halteplatte gegen die Öffnung in der Raumwand abdichtet. Es wird so der verbleibende Spalt zwischen der Halteplatte und der Ausnehmung in der Raumwand abgedichtet. So sind Reinraum und Technikbereich gas- und staubdicht gegeneinander abgedichtet.
In einer Ausführungsform der Erfindung weist die Dichtung ein Hohlkammerprofil auf. Die Dichtung ist eine aufblasbare Dichtung. Sie wird mit Druckluft gefüllt und kann so einfach und schnell dichtend wirken, sie kann aber auch einfach deaktiviert werden, so dass die Vorrichtung einfach und schnell ein- und umgebaut werden kann.

Bevorzugt werden in weiteren Ausgestaltungen der Erfindung Mühlen, Sichter, Mischer, Dosiereinrichtungen, Zellenradschleusen oder Kombinationen davon in die Halteplatte eingebaut.
Zur weiteren Ausgestaltung der Erfindung ist die Vorrichtung mit Rollen zur Bewegung in Raum ausgestattet. Alternativ kann die Vorrichtung mit Transportluftkissen ausgerüstet sein, die eine extrem einfache Bewegung und Positionierung der Vorrichtung im Raum bzw. in der vorgesehenen Öffnung in der Raumwand ermöglicht. In Kombination mit der aufgeblasenen Dichtung ist eine einfache und präzise Abdichtung von Reinraum und Technikbereich möglich.

Des Weiteren sind die Durchbrüche durch die Halteplatte für die Wellendurchführungen der Antriebe ebenfalls staub- und luftdicht abgeschlossen, beispielsweise durch Wellendichtungen, Spülspalte oder andere statischen Sichtungen.
Die Erfindung ist geeignet um ein Modulkonzept zu ergänzen. Dabei können verschiedene Mühlentypen je nach Aufgabenstellung in der Halteplatte ausgetauscht werden, ohne. z.B. die Dosiervorrichtung und einen nachgeschalteten Windsichter umbauen zu müssen.
Es ist auch möglich die senkrechte Halteplatte der Vorrichtung aus mehreren gegeneinander abgedichteten Abschnitten bestehen zu lassen, die je eine verfahrenstechnische Maschine aufnimmt, die je nach Aufgabenstellung und benötigte Maschine zu einer Halteplatte zusammengestellt wird. Auch hier kommt eine aufblasbare Dichtung zum Einsatz. Es können auch mehrere Vorrichtungen mit unterschiedlichen Maschinen bereitgestellt werden, die je nach Aufgabenstellung in einem vorhandenen Reinraum genutzt werden.

Dieses Prinzip kann auch bei Isolatoren Anwendung finden, wenn ein und der selbe Isolator mit unterschiedlichen Maschinen ausgerüstet werden soll. Es kann dann das gesamte Modul ausgetauscht werden und es müssen nicht die Maschinen und Antriebe aus und andere eingebaut werden.
Die Erfindung wird anhand der Figuren im nachfolgenden Ausführungsbeispiel beschrieben. Die Figuren zeigen:
Figur 1: Vorrichtung in einer perspektivischen Darstellung
Figur 2. Vorrichtung eingebaut in eine Öffnung einer Reinraumwand.

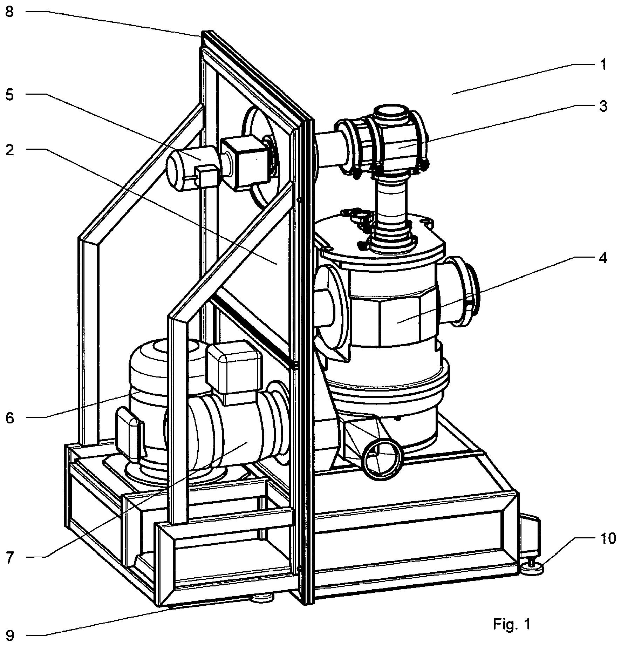

Die Figur 1 zeigt die Vorrichtung (1) mit Halteplatte (2), eine Sichtermühle (4) und eine Zellenradschleuse (3) mit den zugehörigen Antrieben (5, 6, 7). Die Vorrichtung (1) wird durch die Halteplatte in zwei Bereiche aufgeteilt. Auf der einen Seite sind die produktberührten Komponenten Sichtermühle (4) und Zellenradschleuse (3) angeordnet. Sie stellen die Reinraumseite dar. Im Bereich der Wellendurchführungen durch die Halteplatte (2) werden die Komponenten durch entsprechende Dichtungen und Spülspalte abgedichtet. Auf der zweiten Seite der Halteplatte (2) sind die zugehörigen Antriebe (5, 6, 7) und steuerungstechnischen Elemente angeordnet. Sie stellen den Technikbereich dar. Die Halteplatte (2) weist an ihrem Umfang eine umlaufende Dichtung (8) auf. Sie dichtet den Reinraum gegen den Technikbereich gas- und staubdicht ab. Sie ist aufblasbar ausgeführt. Um die Vorrichtung (1) einfach zu bewegen und genau zu positionieren ist sie mit Transportluftkissen (9) an der Bodenseite ausgestattet. Sie funktionieren mit Druckluft. Eine Bewegung der Vorrichtung (1) in der eingebauten Stellung wird mittels arretierbarer Gewindefüße (10) verhindert.

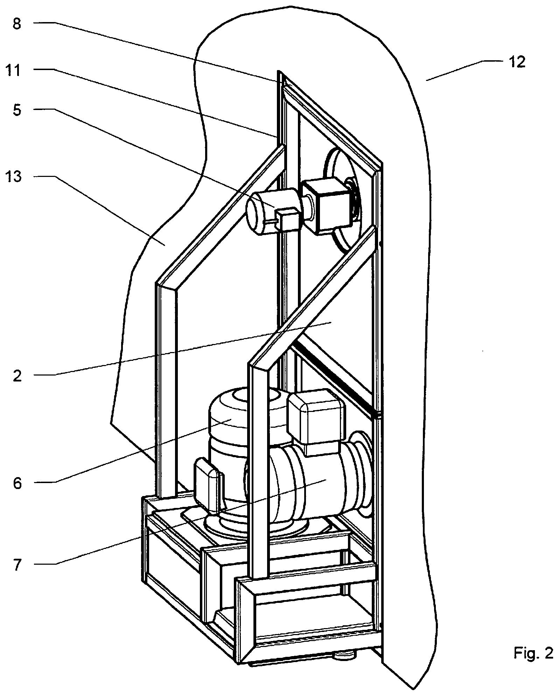

In Figur 2 ist die Vorrichtung (1) dargestellt wie sie in der Wandöffnung (11) des Reinraumes angeordnet ist. Die Halteplatte (2) der Vorrichtung (1) mit den produktberührten Komponenten (3, 4) und den Antrieben (5, 6, 7) ist in einer rechteckigen, türähnlichen Ausnehmung (11) in der Wand des Reinraums positioniert, wobei die produktberührten Komponenten (3, 4) auf der Reinraumseite angeordnet sind und die Antriebs-(5,6,7) und Steuerelemente auf der reinraumabgewandten Seite, dem Technikbereich angeordnet sind.
Die Dichtung (8) ist aufgeblasen und dichtet die Vorrichtung (1) gegen die Wand und den Boden ab, sodass gleichzeitig der Reinraum gegen den Technikbereich gas- und staubdicht abgedichtet ist. Die Dichtung (8) wird mit gereinigter d.h. ölfreier Duckluft befüllt.
Die Durchführungen in der Halteplatte (2) zwischen Prozesskomponente (3, 4) und Antriebsteil (5, 6, 7) sind ebenfalls abgedichtet. Hier kommen entsprechende Dichtungssysteme und Spülspalte zum Einsatz. Die aufblasbare Dichtung (8) besitzt ein Hohlkammerprofil. Sie dichtet über einen breiten Bereich die Halteplatte (2) der Vorrichtung (1) gegen die Füllung der Wandausnehmung (11) ab. Aufgrund der Form der Dichtung wird hier eine Abdichtung gegen Staub und Luft erreicht.
2 Halteplatte
3 Zellenradschleuse
4 Sichtermühle
5 Motor
6 Motor
7 Motor
8 Aufblasbare Dichtung
9 Transportluftkissen
10 Arretierbare Füße
11 Wandöffnung
12 Reinraum
13 Technikbereich

## Patentansprüche

1. Vorrichtung (1) zum Einbauen einer oder mehrerer verfahrenstechnischer Maschinen mit einer Halteplatte (2) für die Maschinen in eine Öffnung (11) einer Wand eines Raums, wobei die Halteplatte (2) eine erste Seite mit den produktberührten Komponenten der Maschinen (3, 4) aufweist und eine zweite Seite mit den Antriebs- (5, 6, 7) und Steuerkomponenten der Maschinen, wobei die Halteplatte (2) an ihrem Umfang eine umlaufende Dichtung (8) aufweist, die die Halteplatte (2) gegen die Wand des Raumes abdichtet, **dadurch gekennzeichnet, dass** die Dichtung (8) eine aufblasbare Dichtung ist und die Vorrichtung (1) mit Rollen oder Transportluftkissen (10) zur Bewegung und Positionierung im Raum ausgestattet ist.

2. Vorrichtung nach Anspruch 1 **dadurch gekennzeichnet, dass** der Raum ein Reinraum oder Produktionsraum ist und die Wand eine Trennung zwischen Rein- oder Produktionsraum und Technikraum ist.

3. Vorrichtung nach Anspruch 1 **dadurch gekennzeichnet, dass** die produktberührten Komponenten der Maschinen (3, 4) auf der Reinraum- oder Produktionsraumseite der Halteplatte (2) angeordnet sind und die Antriebs- (5, 6, 7) und Steuerungskomponenten an der reinraum- oder produktionsraumabgewandten Seite der Halteplatte (2), einem Technikbereich, angeordnet sind.

4. Vorrichtung nach einem oder mehreren der vorangegangenen Ansprüche, **dadurch gekennzeichnet, dass** die Dichtung (8) gas- und staubdicht ist.

5. Vorrichtung nach einem oder mehreren der vorangegangenen Ansprüche, **dadurch gekennzeichnet, dass** eine der verfahrenstechnischen Maschinen (3, 4) eine Mühle, ein Sichter, ein Mischer, eine Dosiereinheit, eine Zellenradschleuse ist oder Kombinationen daraus sind.

6. Vorrichtung nach einem oder mehreren der vorangegangenen Ansprüche, **dadurch gekennzeichnet, dass** die Durchbrüche in der Halteplatte (2) für die Wellendurchführungen der Maschinen staub- und gasdicht abgedichtet sind.

7. Vorrichtung nach einem oder mehreren der vorangegangenen Ansprüche, **dadurch gekennzeichnet, dass** die Halteplatte (2) aus mehreren gegeneinander abgedichtete Abschnitten besteht die je eine verfahrenstechnische Maschine tragen.

## Claims

1. Device (1) to permit installation of one or more process-technological machines with a mounting plate (2) for the machines in an opening (11) of a wall of a room, whereby the mounting plate (2) accommodates the product-contact components of the machines (3, 4) on the one side and the drive (5, 6, 7) and control components of the machines on the other side, whereby the mounting plate (2) features a seal (8) around its circumference which seals the mounting plate (2) against the wall of the room, **characterised in that** the seal (8) is an inflatable seal and the device (1) is equipped with castors or air cushion transporters (9) to permit movement around and positioning in the room.

2. Device in accordance with Claim 1, **characterised in that** the room is either a clean room or a production room and the wall constitutes a segregation between the clean room or production room and the technical zone.

3. Device in accordance with Claim 1, **characterised in that** the product-contact components of the machines (3, 4) are installed on the clean room or production room side of the mounting plate (2) and the drive (5, 6, 7) and control components are installed on the side of the mounting plate (2) facing away from the clean room or production room, i.e. the technical zone.

4. Device in accordance with one or more of the above claims, **characterised in that** the seal (8) is in gas-tight and dust-tight design.

5. Device in accordance with one or more of the above claims, **characterised in that** one of the process-technological machines (3, 4) is a mill, classifier, mixer, dosing unit, rotary valve or a combination of these.

6. Device in accordance with one or more of the above claims, **characterised in that** the openings in the mounting plate (2) for the shaft bushings of the machines are in gas-tight and dust-tight design.

7. Device in accordance with one or more of the above claims, **characterised in that** the mounting plate (2) consists of several sections sealed against each other which accommodate one process-technological machine in each case.

## Revendications

1. Dispositif (1) pour le montage d'une ou plusieurs machines assurant des processus techniques, avec une platine de support (2) pour les machines dans l'ouverture (11) de la paroi d'un local, cette platine de support (2) présentant une première face avec les composants des machines (3, 4) en contact avec les produits, et une deuxième face avec les composants d'entraînement (5, 6, 7) et de pilotage des machines, cette platine de support (2) présentant sur sa périphérie un joint continu (8) qui étanchéifie la platine de support (2) contre la paroi du local,
**caractérisé par le fait que** le joint (8) est un joint gonflable et que le dispositif (1) est équipé de rouleaux ou de coussins d'air de transport (10) pour le déplacement et le positionnement dans le local.

2. Dispositif selon la revendication 1, **caractérisé par le fait que** le local est une salle blanche ou salle de production, et que la paroi est une séparation entre la salle blanche et le local technique.

3. Dispositif selon la revendication 1, **caractérisé par le fait que** les composants des machines (3, 4) en contact avec les produits sont disposés sur la face de la platine de support (2) dirigée vers la salle blanche ou la salle de production, et que les composants d'entraînement (5, 6, 7) et de pilotage sont disposés sur la face de la platine de support (2) orientée du côté opposé à la salle blanche ou salle de production, vers un local technique.

4. Dispositif selon une ou plusieurs des revendications précédentes, **caractérisé par le fait que** le joint (8) est étanche aux gaz et poussières.

5. Dispositif selon une ou plusieurs des revendications précédentes, **caractérisé par le fait que** l'une des machines assurant des processus techniques (3, 4) est un broyeur, un séparateur, un mélangeur, une unité de dosage, une écluse à roue cellulaire ou une combinaison de ceux-ci.

6. Dispositif selon une ou plusieurs des revendications précédentes, **caractérisé par le fait que** les traversées des arbres des machines dans la platine de support (2) sont étanches aux poussières et aux gaz.

7. Dispositif selon une ou plusieurs des revendications précédentes, **caractérisé par le fait que** la platine de support (2) est constituée de plusieurs sections étanches l'une par rapport à l'autre, qui supportent une machine assurant un processus technique.
